# EUROPÄISCHE PATENTSCHRIFT

(11) **EP 0 413 011 B1**
(45) Veröffentlichungstag und Bekanntmachung des Hinweises auf die Patenterteilung: **26.01.1994**
(21) Anmeldenummer: 90902995.1
(22) Anmeldetag: 19.02.1990
(51) Int. Cl.: A63H 33/04, F16D 1/10, F16B 21/02, F16B 21/16

(54) **VERBINDUNGSVORRICHTUNG FÜR SPIELZEUG-BAUELEMENTE**
CONNECTING DEVICE FOR TOY BUILDING BLOCKS
DISPOSITIF DE LIAISON POUR DES ELEMENTS DE JEUX DE CONSTRUCTION

(30) Priorität: 24.02.1989 CH 680/89; 24.02.1989 CH 681/89
(43) Veröffentlichungstag der Anmeldung: 20.02.1991
(73) Patentinhaber: Interlego AG, CH-6340 Baar (CH); LEGO A/S, DK-7190 Billund (DK)
(72) Erfinder: BOLLI, Peter, CH-6312 Steinhausen (CH); LOOSER, Heinz, CH-6340 Baar (CH)
(74) Vertreter: Münch, Otto
(86) Internationale Anmeldenummer: CH9000039
(87) Internationale Veröffentlichungsnummer: WO9009823

(56) Entgegenhaltungen:
- EP-A- 0 273 863
- AU-B- 469 175
- DE-B- 1 026 134
- FR-A- 2 366 479
- GB-A- 1 065 269
- US-A- 3 638 352

## Beschreibung

Die Erfindung betrifft eine Verbindungsvorrichtung für Spielzeug-Bauelemente, mit einem Schaft und einer auf den Schaft in dessen Längsrichtung aufschiebbaren Schaftbuchse, wobei der Schaft einen von der Kreisform abweichenden Querschnitt mit mehreren radial vorstehenden Querschnittsteilen hat, die aus Abschnitten einer Kreiszylinderfläche bestehende äussere Flächen haben, und die durch Zwischenbereiche kleineren Durchmessers voneinander getrennt sind, wobei der Schaft mit mehreren, in axialem Abstand voneinander angeordneten Quernuten versehen ist, in welche die Schaftbuchse zur Festlegung ihrer Längslage auf dem Schaft einrastbar ist. Eine solche Verbindungsvorrichtung ist aus der U.S. Patentschrift Nr. 3,638,352 bekannt. Diese bekannte Verbindungsvorrichtung umfasst einen aus Rad und Welle bestehenden Spielzeug-Bausatz, bei dem das Rad ein Radteil und ein Nabenteil aufweist, das über einen Flansch am Radteil befestigbar ist. Das Rad ist über ein Befestigungselement mit der Welle lösbar verbunden. Die Welle weist einen kreuzförmigen Querschnitt auf und ist mit Querrillen versehen, wobei das Rad- und Nabenteil mit je einem an den Querschnitt der Welle angepassten Passloch versehen ist. Das Befestigungselement ist als ein in eine Querrille der Welle eingreifender Federring ausgebildet, der in einer im Radteil vorgesehenen Vertiefung beweglich aufgenommen ist und durch das Nabenteil gehaltert ist. Der Flansch des Nabenteils ist über Kupplungszapfen mit dem Radteil befestig bar.

Bei dieser bekannten Verbindungsvorrichtung kann ein Rad leicht und ohne Werkzeuge durch Aufschieben auf eine Welle auf dieser befestigt werden. Die Verbindung ist drehfest, nachteilig jedoch ist die begrenzt axiale Belastbarkeit des Rades.

Aus der EP-A-0 273 863 ist eine weitere Verbindungsvorrichtung der eingangs genannten Art bekannt. Der Schaft hat hier zwei um 180° gegeneinander versetzte, radial vorstehende Querschnittsteile mit sägezahnförmigen Quernuten sowie Zwischenbereiche kleineren Durchmessers. Je auf einer Seite der radial vorstehenden Querschnittsteile erstreckt sich parallel zur Schaftachse eine radial abstehende Leiste. Die Schaftbuchse hat ebenfalls um 180° gegeneinander versetzte Bereiche mit sägezahnförmigen Nuten. Zwischen diesen Bereichen hat die Durchgangsöffnung einen Durchmesser, der dem Aussendurchmesser der radial vorstehenden Querschnittsteile des Schaftes entspricht. Die Buchse kann in der einen Drehstellung längs des Schaftes verschoben und durch Drehen um 90° axial starr mit dem Schaft verbunden werden. Dabei rasten die Leisten des Schaftes in entsprechende Längsnuten der Schaftbuchse ein, um ein ungewolltes Lösen der Verbindung zu verhindern. Diese bekannte Verbindungsvorrichtung eignet sich vor allem zur Befestigung von Lagerplatten eines Unterputz-Spülkastens. Eine in beiden Richtungen drehfeste Verbindung zwischen Schaft und Schaftbuchse ist durch diese Ausbildung nicht mgölich. Die Vorrichtung ist deshalb zur Verbindung von Spielzeugbauelementen ungeeignet.

Aus der DE-C-1 026 134 ist eine Vorrichtung zur lösbaren Sicherung von Zahnrädern auf Keilwellen bekannt. Die Federn der Keilwelle sind benachbart ihrem axialen freien Ende durch eine Umfangsnut unterbrochen. Die Vorrichtung besteht aus zwei Ringen, die je eine Innenverzahnung entsprechend der Keilverzahnung der Keilwelle haben. Der eine Ring ist so breit wie die Umfangsnut.

Die Ringe sind durch radiale Stifte im einen Ring, die in eine Umfangsnut des andern Rings ragen, miteinander verbunden. Die Ringe sind zwischen zwei Grenzstellungen gegeneinander verdrehbar und durch eine Feder in die erste Grenzstellung vorbelastet. In der ersten Grenzstellung sind die Innenverzahnungen der beiden Ringe gegeneinander versetzt, in der zweiten fluchten sie dagegen.

Der Erfindung liegt die Aufgabe zugrunde, eine Verbindungsvorrichtung der eingangs genannten Art derart auszubilden, dass sie insbesondere zur Verbindung von Spielzeug-Bauelementen geeignet ist, eine rasche Montage ermöglicht und sowohl axial als auch in beiden Umfangsrichtungen eine sichere Verbindung schafft.

Diese Aufgabe wird dadurch gelöst, dass die Schaftbuchse aus einem ersten Buchsenteil und einem zweiten Buchsenteil besteht, dass die beiden Buchsenteile unverlierbar miteinander verbunden und gegeneinander zwischen einer Lösestellung, in welcher die Schaftbuchse axial längs des Schaftes verschiebbar ist und einer Sperrstellung bewegbar sind, in welcher mindestens ein einstückig angeformter Vorsprung in eine der Quernuten des Schaftes formschlüssig eingreift, dass zusammenwirkende Rastelemente am ersten und zweiten Buchsenteil vorhanden sind, welche zumindest in einer der Stellungen der beiden Buchsenteile einrasten, und dass mindestens eines der Buchsenteile eine dem Querschnitt des Schaftes angepasste Durchgangsöffnung zum drehfesten Eingriff mit dem Schaft aufweist.

Ausführungsbeispiele des Erfindungsgegenstandes werden nachstehend anhand der Zeichnungen erläutert. Es zeigen:
- Fig. 1: eine perspektivische Ansicht eines Abschnitts einer ersten Ausführungsform eines Schaftes der erfindungsgemässen Verbindungsvorrichtung;
- Fig. 2: eine Seitenansicht des Schaftes der Fig. 1,
- Fig. 3: eine Stirnansicht des Schaftes der Fig. 1,
- Fig. 4 bis Fig. 8: Halbschnitte des Schaftes der Fig. 1 mit einer darauf befindlichen erfindungsgemässen Schaftbuchse in verschiedenen Stellungen der Schaftbuchse bezüglich des Schaftes,
- Fig. 9: eine Ansicht auf die eine Stirnseite eines Ausführungsbeispiels der erfindungsgemässen Schaftbuchse,
- Fig. 10: einen Schnitt gemäss der Linie X-X in Fig. 9,
- Fig. 11: einen Schnitt gemäss der Linie XI-XI in Fig. 9,
- Fig. 12: eine Ansicht auf die andere Stirnseite der Schaftbuchse gemäss den Fig. 9 bis 11,
- Fig. 13: eine perspektivische Ansicht auf die eine Stirnseite des einen Buchsenteils der Schaftbuchse der Fig. 9 bis 12,
- Fig. 14: eine perspektivische Ansicht auf die andere Stirnseite des Buchsenteils der Fig. 13 in dazu um 90° verdrehter Lage bzw. auf die andere Stirnseite des anderen Buchsenteils der Schaftbuchse der Fig. 9 bis 12,
- Fig. 15: eine perspektivische Ansicht auf eine aus den Buchsenteilen gemäss Fig. 13 und 14 zusammengesetzten Schaftbuchse in ausgezogener Relativlage ihrer beiden Buchsenteile;
- Fig. 16: eine perspektivische Ansicht auf die Schaftbuchse der Fig. 15 in zusammengestossener Relativlage ihrer beiden Buchsenteile,
- Fig. 17: eine perspektivische Ansicht einer zweiten Ausführungsform eines Schaftes der Verbindungsvorrichtung,
- Fig. 18: eine Seitenansicht des Schaftes der Fig. 17,
- Fig. 19: eine Stirnansicht des Schaftes der Fig. 17,
- Fig. 20: eine perspektivische Ansicht einer Ausführungsform der erfindungsgemässen Verbindungsvorrichtung, bei welcher die Schaftbuchse mit einem axialen Verlängerungsansatz zur Aufnahme eines Schaftes versehen ist,
- Fig. 21: eine perspektivische Ansicht einer als Schaftkupplung ausgebildeten Ausführungsform der erfindungsgemässen Verbindungsvorrichtung,
- Fig. 22 und Fig. 23: perspektivische Ansichten eines ersten Buchsenteils einer weiteren Ausführungsform einer Schaftbuchse,
- Fig. 24 und Fig. 25: perspektivische Ansichten eines zweiten Buchsenteils der Schaftbuchse,
- Fig. 26: einen Axialschnitt durch die aus dem ersten Buchsenteil und dem zweiten Buchsenteil zusammengebaute Schaftbuchse,
- Fig. 27 und Fig. 28: Stirnansichten der Schaftbuchse der Fig. 26 in der entriegelten und verriegelten Stellung, und
- Fig. 29 bis Fig. 32: perspektivische Ansichten der Schaftbuchse der Fig. 26 in der verriegelten und entriegelten Stellung.

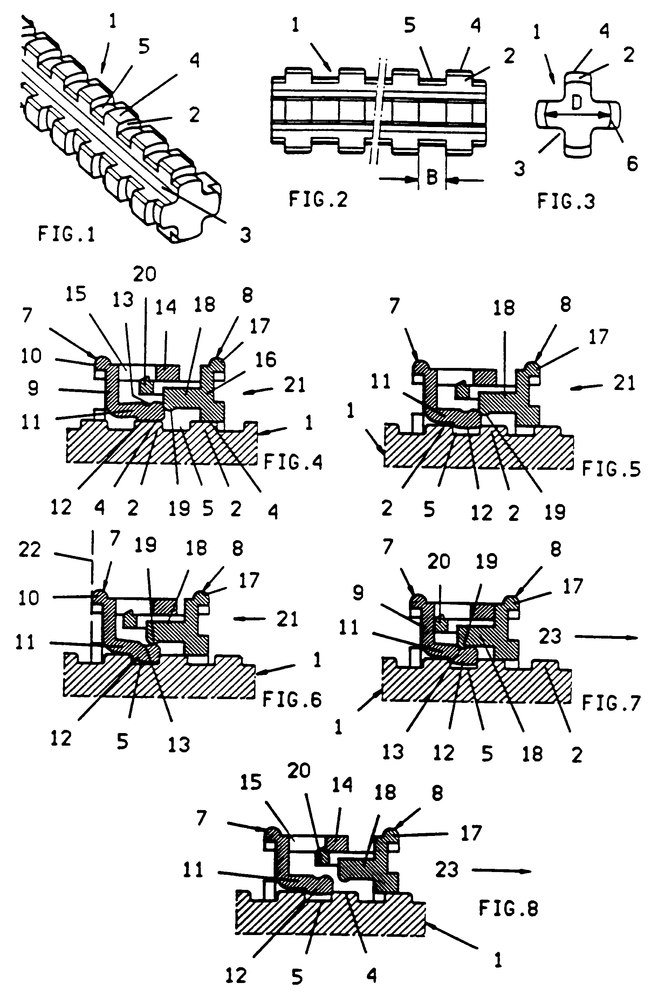

Der in den Fig. 1 bis 3 dargestellte Schaft 1 weist einen von der Kreisform abweichenden Querschnitt mit vier in der Art eines Kreuzes radial vorstehenden Querschnittsteilen 2 auf, die durch Zwischenbereiche 3 (Fig. 1, 3) kleineren Durchmessers in der Umfangsrichtung getrennt sind. Jeder Querschnittsteil 2 hat eine äussere Flache 4, welche durch einen Abschnitt einer Kreiszylinderfläche gebildet ist, so dass der Schaft 1 in ein kreisrundes Passloch eines Bauelementes steckbar ist. Der Schaft 1 ist zudem in gleichmässigen Abständen mit Quernuten 5 einheitlicher Breite B (Fig. 2) versehen. Im dargestellten Ausführungsbeispiel ist die Breite B der Quernuten 5 gleich gross wie die Breite der radial vorstehenden Querschnittsteile 2. Die Quernuten 5 weisen äussere Flächen 6 (Fig. 3) auf, die ebenfalls durch Abschnitte einer Kreiszylinderfläche mit einem Durchmesser D (Fig. 3) gebildet sind.

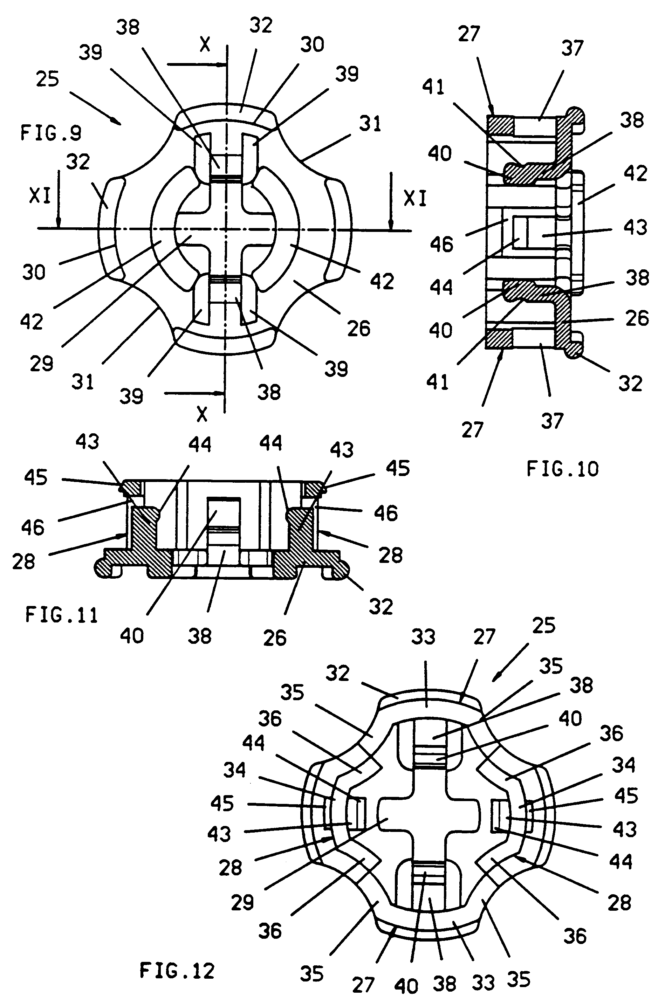

In Fig. 4 sind in einem Längshalbschnitt ein Schaft 1 gemäss den Fig. 1 bis 3 und eine darauf aufgeschobene Schaftbuchse gemäss der Erfindung dargestellt. Die Schaftbuchse besteht hierbei aus zwei separaten, aber miteinander in Verbindung stehenden Buchsenteilen 7 und 8. Eine Gesamtdarstellung und weitere Einzelheiten der Buchsenteile 7 und 8 werden nachfolgend anhand der Fig. 9 bis 16 präsentiert.

Das eine Buchsenteil 7 weist eine vordere Stirnwand 9 auf, welche verständlicherweise mit einem aus Fig. 4 nicht näher ersichtlichen Ausschnitt mit der Form des Querschnitts des Schafts 1 der Fig. 1 und 3 versehen ist, so dass das Buchsenteil 7 auf dem Schaft 1 in dessen Längsrichtung verschiebbar ist. Die Stirnwand 9 ist mit einem äusseren Randwulst 10 versehen, der als Griffelement vorgesehen ist. An die Stirnwand 9 ist eine sich in axialer Richtung erstreckende Zunge 11 angeformt, welche demnach eine gewisse radiale Elastizität hat. Die Zunge 11 ist auf ihrer radial inneren Seite mit einem Nocken 12 und auf ihrer radial äusseren Seite mit einer nutartigen Vertiefung 13 versehen. Das Buchsenteil 7 weist zudem einen hülsenförmigen Abschnitt 14 mit einer rechteckigen Oeffnung 15 auf.

Das Buchsenteil 8 hat ebenfalls eine äussere Stirnwand 16, welche einen nicht näher dargestellten, angepassten Ausschnitt für den Schaft 1 der Fig. 1 und 3 hat, so dass auch das Buchsenteil 8 auf dem Schaft 1 axial verschiebbar ist. Die Stirnwand 16 ist ebenfalls mit einem äusseren Randwulst 17 als Griffelement versehen. Ein sich von der Stirnwand 16 in Längsrichtung nach dem Innern des Buchsenteils 8 erstreckendes, an die Stirnwand 16 angeformtes Element 18 weist einen radial inneren Vorsprung 19 auf. Das Element 18 hat eine verhältnismässig grosse Wandstärke, so dass es im Gegensatz zur Zunge 11 des Buchsenteils 7 radial wenig elastisch ist. Vorzugsweise ist das Element 18 als Nocken eines hülsenförmigen Ansatzes (in Fig. 4 nicht näher dargestellt) der Stirnwand 16 ausgebildet. Dieser hülsenförmige Ansatz ist zudem mit einem zahnartigen, radial äusseren Vorsprung 20 versehen, der zufolge einer Ausnehmung eine geringe radiale Elastizität hat.

Wie aus Fig. 4 ersichtlich ist, sind die Buchsenteile 7 und 8 der dargestellten Schaftbuchse innerhalb einer bestimmten Strecke ineinander verschiebbar, wobei das Buchsenteil 7 das äussere und das Buchsenteil 8 das innere Schiebeteil darstellen. Die relative Verschiebestrecke ist in der einen Richtung (der Stossrichtung) dadurch begrenzt, dass der Vorsprung 20 und die Innenfläche der Stirnwand 16 des Buchsenteils 8 zum Anliegen an das Buchsenteil 7 kommen. In der anderen Richtung (der Zugrichtung) ist die relative Verschiebestrecke dadurch begrenzt, dass der äussere Vorsprung 20 des Buchsenteils 8 am hülsenförmigen Abschnitt 14 des Buchsenteils 7 anschlägt.

Es ist somit aus Fig. 4 ersichtlich, dass die vorliegende Schafthülse, die aus den beiden gegenseitig axial verschiebbaren Buchsenteilen 7 und 8 zusammengesetzt ist, auf dem Schaft 1 durch Ausübung eines axialen Druckes auf den Randwulst 17 des Buchsenteils 8 in der Richtung des Pfeils 21 verschiebbar ist, indem der innere Vorsprung 19 des Buchsenteils 8 auf die Stirnfläche der Zunge 11 des Buchsenteils 7 drückt. Diese Verschiebebebewegung auf dem Schaft 1 erfolgt ohne grosse Kraftanstrengung. Der einzige mechanische Widerstand, der beim Aufschieben der Buchsenteile 7 und 8 auf den Schaft 1 zu überwinden ist, ist durch das elastische Ausbiegen der Zunge 11 des Buchsenteils 7 beim Ueberstreichen der äusseren Fläche 4 eines Querschnittsteils 2 des Schafts 1 verursacht, vgl. die Fig. 4.

Bei Fortsetzung der Verschiebebewegung federt die Zunge 11 des Buchsenteils 7 in ihre Ruhelage zurück, wenn sie mit ihrem Nocken 12 über eine Quernut 5 des Schafts 1 zu liegen kommt, wie dies in Fig. 5 dargestellt ist. Somit kann die aus den Buchsenteilen 7 und 8 bestehende Schaftbuchse bis in eine bestimmte, gewünschte Axiallage über den Schaft 1 geschoben werden, wobei die in Fig. 5 dargestellten Zwischenpositionen durch leichtes Einrasten des Nockens 12 der Zunge 11 des Buchsenteils 7 in eine Quernut 5 des Schafts 1 für den Benützer jeweils spürbar und hörbar sind.

Wenn die gewünschte Axiallage der Schaftbuchse auf dem Schaft 1 erreicht ist, also eine Lage gemäss Fig. 5, wird als nächster Schritt das Buchsenteil 7 auf dem Schaft 1 verriegelt. Hierzu wird einerseits eine weitere axiale Bewegung des Buchsenteils 7 in der Richtung des Pfeils 21 dadurch verhindert, dass das Buchsenteil 7 entweder von Hand festgehalten wird, oder dass das Buchsenteil 7 in der betreffenden Lage auf dem Schaft 1 mit seiner Stirnseite an ein anderes, ortsfestes Bauelement anschlägt. Diese beiden Möglichkeiten einer Bewegungshemmung sind in Fig. 6 durch eine gestrichelte Linie 22 angedeutet. Andererseits wird die Ausübung eines Drucks auf das Buchsenteil 8 in Richtung des Pfeils 21 fortgesetzt (Fig. 6). Dadurch drückt der innere Vorsprung 19 des Buchsenteils 8 den Nocken 12 der Zunge 11 des Buchsenteils 7 tiefer in die betreffende Quernut 5 hinein und rastet dann, wie aus Fig. 7 ersichtlich, in die nutartige Vertiefung 13 der Zunge 11 ein. Eine weitere axiale Bewegung des Buchsenteils 8 ist nicht mehr möglich, weil das Buchsenteil 8 mit seinem mit dem Vorsprung 20 versehenen Ende an der Innenseite der vorderen Stirnwand 9 des Buchsenteils 7 anliegt und weil das Buchsenteil 7 bezüglich des Schafts 1 unbeweglich ist, da der Nocken 12 seiner Zunge 11 vom Vorsprung 19 des Buchsenteils 8 in die Quernut 5 des Schafts 1 gedrückt ist.

Somit ist die in Fig 7 dargestellte, die zusammengeschobenen Buchsenteile 7 und 8 umfassende Schaftbuchse gegen eine axiale Verschiebung auf dem Schaft 1 unter einem axialen Druck auf die Stirnseite des Buchsenteils 7 oder diejenige des Buchsenteils 8 absolut (das heisst bis zu einer mutwilligen Zerstörung der Buchsenteile) gesichert. Mittels einer oder mehrerer Schaftbuchsen gemäss Fig. 7 können demnach auf dem Schaft 1 beliebige Bauelemente, die ein Passloch für die Querschnittsteile 2 des Schafts 1 haben, in ihrer axialen Lage auf dem Schaft 1 durch eine einfache axiale Druckausübung auf das Buchsenteil 8 bezüglich des Buchsenteils 7 fest fixiert werden. Wie aus Fig. 7 ferner ersichtlich ist, beansprucht hierbei diese Schaftbuchse auf dem Schaft 1 eine axiale Länge von nur zwei je aus einem Querschnittsteil 2 und einer Quernut 5 bestehende Längeneinheiten des Schafts 1.

Zum Lösen der verriegelten Schafthülse nach Fig. 7 und zum Abziehen der Schafthülse vom Schaft 1 wird der äussere Randwulst 17 des Buchsenteils 8 mit Fingern umfasst und in Richtung des Pfeils 23 in Fig. 7 gezogen. Da das Buchsenteil 7 mit seiner Zunge 11 auf dem Schaft 1 verankert ist, braucht es hierbei nicht festgehalten zu werden. Durch Ziehen des Buchsenteils 8 gleitet dessen Vorsprung 19 unter weiterer Versenkung des Nockens 12 der Zunge 11 des Buchsenteils 7 in die Quernut 5 aus der nutartigen Vertiefung 13 der Zunge 11, wie dies in umgekehrter Reihenfolge anhand der Fig. 6 bereits erläutert wurde. Durch weiteres Ziehen des Buchsenteils 8 in Richtung des Pfeils 23 in Fig. 8 gelangt die Schaftbuchse in den in Fig. 5 dargestellten Zustand, worauf gemäss Fig. 8 der äussere Vorsprung 20 des Buchsenteils 8 in der rechteckigen Oeffnung 15 des Abschnitts 14 des Buchsenteils 7 zum Anliegen an einen Rand der Oeffnung 15 kommt. Somit wird nun beim Abziehen des Buchsenteils 8 vom Schaft 1 in der Richtung des Pfeils 23 auch das Buchsenteil 7 mitgenommen.

Eine besonders vorteilhafte Ausführungsform der anhand der Fig. 4 bis 8 mehr schematisch erläuterten, erfindungsgemässen Schaftbuchse wird nachstehend anhand der Fig. 9 bis 16 im einzelnen beschrieben. Die zu beschreibende Ausführungsform beruht auf der Erkenntnis, dass die in den Fig. 4 bis 8 dargestellten Buchsenteile 7 und 8, welche die Schaftbuchse bilden, identisch sein können und dadurch in der in den Fig. 4 bis 8 gezeigten Weise zusammengestellt und miteinander verbunden werden können, dass das eine der beiden identischen Buchsenteile gegenüber dem anderen um 90° gedreht wird. Dadurch lässt sich nicht nur eine vereinfachte Herstellung der Schaftbuchse mit nur einer Form, sondern auch eine noch bessere Verriegelung erzielen.

In den Fig. 9 und 12 sind Ansichten auf die beiden Stirnseiten des einzigen Buchsenteils 25 und in den Fig. 10 und 11 Schnitte durch das Buchsenteil 25 in zwei zueinander senkrechten Ebenen dargestellt. Wie bereits aus den Halbschnitten der Fig.4 bis 8 hervorgegangen ist, ist das Buchsenteil 25 axialsymmetrisch ausgebildet.

Das Buchsenteil 25 hat einen Flansch 26 und daran angeformte Hülsenabschnitte 27 und 28, die sich jeweils nur über Winkelbereiche von 90° erstrecken. In seinem Mittenbereich ist der Flansch 26 mit einer kreuzförmigen Oeffnung 29 versehen (Fig. 9, 12), in welche der Schaft 1 der Fig. 1 bis 3 derart passt, dass das Buchsenteil 25 auf den Schaft 1 aufgeschoben, auf diesem aber nicht verdreht werden kann.

Der Flansch 26 und die daran angeformten Hülsenabschnitte 27 und 28 weisen Bereiche unterschiedlicher Form und Abmessungen auf. Wie insbesondere aus Fig. 9 ersichtlich ist, weist der Flansch 26 abwechselnd vier nach aussen kreisbogenförmig gekrümmte Randbereiche 30 und vier nach innen kreisbogenförmig gekrümmte Randbereiche 31 auf. Die nach aussen gekrümmten Randbereiche 30 des Flansches 26 sind mit einem axial und radial vorstehenden Randwulst 32 versehen (Fig. 10, 11). Auch die aus Fig. 12 ersichtlichen Hülsenabschnitte 27 und 28 setzen sich je aus einem nach aussen kreisförmig gekrümmten Abschnitt 33 bzw. 34 und beidseitig der Abschnitte 33, 34 aus einem nach innen kreisförmig gekrümmten Abschnitt 35 bzw. 36 zusammen. Hierbei sind die Hülsenabschnitte 28 gegenüber den Hülsenabschnitten 27 radial nach innen versetzt, schliessen aber mit ihren Aussenflächen direkt an die Innenflächen der Hülsenabschnitte 27 an.

Aus Fig. 10 ist ersichtlich, dass die beiden Hülsenabschnitte 27 mit einer rechteckigen Oeffnung 37 versehen sind. Ferner ist im Winkelbereich der beiden Hülsenabschnitte 27 an den Flansch 26 je eine Zunge 38 angeformt, die sich in das Innere des Hülsenabschnitts 27 erstreckt. Die Zunge 38 ist vom Flansch 26 durch zwei spaltförmige Oeffnungen 39 getrennt (Fig. 9), so dass sich die Zunge 38 in beiden radialen Richtungen elastisch ausbiegen kann. Die Zunge 38 weist auf ihrer radial inneren Seiten einen abgerundeten Nocken 40 auf, dessen Länge in axialer Richtung gleich der Breite B der Quernuten 5 des Schafts 1 der Fig. 2 ist. Auf ihrer radial äusseren Seite ist die Zunge 38 mit einer nutartigen Vertiefung 41 versehen. Die auf dem Flansch 26 zwischen gegenüberliegenden spaltförmigen Oeffnungen 39 angeformten, gekrümmten Rippen 42 (Fig. 9) sind zur Verstärkung des Flansches 26 vorgesehen.

Aus den Fig. 11 und 12 ist ersichtlich, dass die Hülsenabschnitte 28 mit je einem sich radial nach innen erstreckenden Nocken 43 versehen sind, der zudem einen inneren Vorsprung 44 aufweist, welcher der nutförmigen Vertiefung 41 der Zunge 38 entspricht. In seinem äusseren Endbereich ist jeder Hülsenabschnitt 28 darüberhinaus mit einem äusseren, zahnartigen Vorsprung 45 versehen. Die Nocken 43 sind am Flansch 26 angeformt (Fig. 10, 11) und von einer Oeffnung 46 umgeben. Dadurch erhalten die Nocken 43 eine gewisse radiale Elastizität, die aber kleiner als die radiale Elastizität der Zungen 38 ist. Die Bedeutung dieser radialen Elastizität der Nocken 43 wird nachstehend noch erläutert.

Es ist ersichtlich, dass die Schnittdarstellung des Buchsenteils 25 gemäss Fig. 10 bezüglich der geschnittenen Teile der Schnittdarstellung des Buchsenteils 7 in den Fig. 4 bis 8 entspricht. Ferner ist ersichtlich, dass die um 90° gedrehte Schnittdarstellung des Buchsenteils 25 gemäss Fig. 11 bezüglich der geschnittenen Teile der Schnittdarstellung des Buchsenteils 8 in den Fig. 4 bis 8 entspricht. Somit weist das Buchsenteil 25 sowohl die massgeblichen Funktionsteile des Buchsenteils 7 als auch diejenigen des Buchsenteils 8 der Fig. 4 bis 8 auf, und zwar in um 90° gedrehten, diametralen Lagen. Folglich können zwei identische Buchsenteile 25 gemäss den Fig. 9 bis 12 zur Verwirklichung der Schaftbuchse mit den Buchsenteilen 7 und 8 herangezogen werden, indem die beiden Buchsenteile 25 in einer um 90° relativ gedrehten Lage in axialer Richtung miteinander verbunden werden.

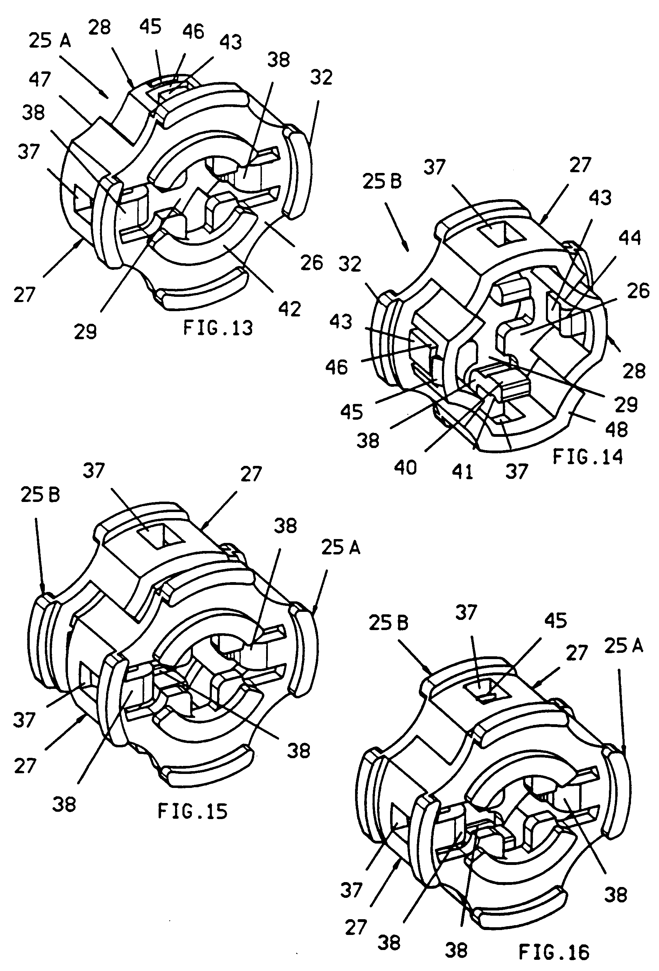

In den Fig. 13 bis 16 ist in perspektivischen Ansichten dieser Vorgang der Bildung einer erfindungsgemässen Schaftbuchse aus zwei Buchsenteilen 25 der Fig. 9 bis 12 dargestellt. In diesen Figuren ist das eine der identischen Buchsenteile mit 25 A und das andere mit 25 B bezeichnet.

Das Buchsenteil 25 A entspricht der stirnseitigen Ansicht des Buchsenteils 25 gemäss Fig. 9, jedoch in einer um 90° gedrehten Lage bezüglich der Lage in Fig. 9 (Ansicht auf die Flanschseite). Das Buchsenteil 25 B entspricht der stirnseitigen Ansicht des Buchsenteils 25 gemäss Fig. 12 (Ansicht auf die offene Seite). Aus den Fig. 13 und 14 ist nun zu ersehen, dass das Buchsenteil 25 A (Fig. 13) mit seiner offenen Stirnseite 47 auf die offene Stirnseite 48 des Buchsenteils 25 B (Fig. 14) geschoben werden kann. Dies ist insbesondere deshalb ermöglicht, weil die Hülsenabschnitte 27 und 28 beider Buchsenteile 25 A und 25 B sowohl in radialer Richtung als auch in Umfangsrichtung derart aufeinander abgestimmt sind, so dass zwischen den Buchsenteilen 25 A und 25 B eine Art Schiebesitz vorliegt. Aus den Fig. 10 und 11 ist ferner ersichtlich, dass beim Aufschieben des Buchsenteils 25 A auf das Buchsenteil 25 B (bzw. umgekehrt) der zahnartige Vorsprung 45 beider Buchsenteile 25 A und 25 B in die radial gegenüberliegende Oeffnung 37 des jeweils anderen Buchsenteils einrastet, so dass die beiden Buchsenteile 25 A und 25 B nicht mehr voneinander trennbar, aber in axialer Richtung relativ verschiebbar sind, wie dies bereits anhand der Fig. 4 bis 8 erläutert worden ist.

In den Fig. 15 und 16 sind die beiden ineinander geschobenen Buchsenteile 25 A und 25 B perspektivisch dargestellt. Die Fig. 15 stellt die relative Lage der Buchsenteile 25 A und 25 B in einem auseinandergezogenen Zustand gemäss Fig. 4 dar, während in Fig. 16 der vollständig ineinander geschobene Zustand der Buchsenteile 25 A und 25 B entsprechend der Fig. 7 dargestellt ist. Aufgrund der vorgängigen Erläuterungen erübrigt sich deshalb eine weitere Beschreibung der Fig. 15 und 16. Aus den Fig. 15, 16 ist aber ersichtlich, dass die beiden Buchsenteile 25 A und 25 B mit ihren Hülsenabschnitten 27 und 28 (in Fig. 15, 16 ist nur der Hülsenabschnitt 27 sichtbar) sowohl in der Längsrichtung als auch in der Radialrichtung aneinander bzw. aufeinander gleiten können, wie dies auch aus Fig. 12 ersichtlich ist. Die Handhabung der miteinander untrennbar verbundenen, gegenseitig axial verschiebbaren und eine erfindungsgemässe Schaftbuchse bildenden Buchsenteile 25 A und 25 B ist demnach äusserst einfach und handgerecht, um die genannte Schaftbuchse auf einem Schaft 1 gemäss den Fig. 1 bis 3 zu verriegeln.

Es ist insbesondere noch darauf hinzuweisen, dass die aus den ineinandergeschobenen Buchsenteilen 25 A und 25 B bestehende Schaftbuchse ingesamt vier Zungen 38 aufweist (in Fig. 15, 16 drei Zungen 38 sichtbar), denen je ein Nocken 43 zugeordnet ist (in Fig. 15, 16 keine Nocken 43 sichtbar), um die Zungen 38 in ein und derselben Quernut 5 des Schafts 1 (Fig. 1 bis 3) zu verriegeln, wenn die beiden Buchsenteile 25 A und 25 B bis zum Anschlag vollständig ineinander geschoben sind.

Bei einem Verriegelungsvorgang, wie er vorgängig anhand der Fig. 4 bis 7 beschrieben worden ist bzw. bei einem anhand der Fig. 7 und 8 beschriebenen Entriegelungsvorgang muss bei einer Anwendung einer aus den Buchsenteilen 25 A und 25 B bestehenden Schaftbuchse ein besonderer Umstand in Betracht gezogen werden. Das zur Verriegelung auf den Schaft 1 geschobene Buchsenteil 25 A oder 25 B würde nämlich bei der Schiebebewegung mit seinen Zungen 38 an den Nocken 43 des anderen, stationären Buchsenteils 25 B bzw. 25 A fest und unbeweglich anstossen, da ja die Zungen 38 noch nicht in die Quernut 5 des Schafts 1 eingerastet sein können, sondern auf den äusseren Flächen 4 des vorangehenden Querschnittsteils 2 aufliegen und demnach radial nach innen unbeweglich sind. Um eine solche unerwünschte und die Verriegelung verhindernde Arretierung der Schiebebewegung zu verhindern, weisen die Nocken 43, wie bereits erwähnt, eine gewisse radiale Elastizität auf, so dass sie beim Schiebevorgang über die Zungen 38 des eingeschobenen Buchsenteils gleiten können. Die radiale Elastizität der Nocken 43 ist jedoch nicht so gross wie diejenige der Zungen 38, so dass die Zungen 38 des eingeschobenen Buchsenteils durch die Nocken 43 des stationären Buchsenteils in die Quernut 5 gedrückt werden, in welche die Zungen 38 des stationären Buchsenteils bereits eingerastet sind.

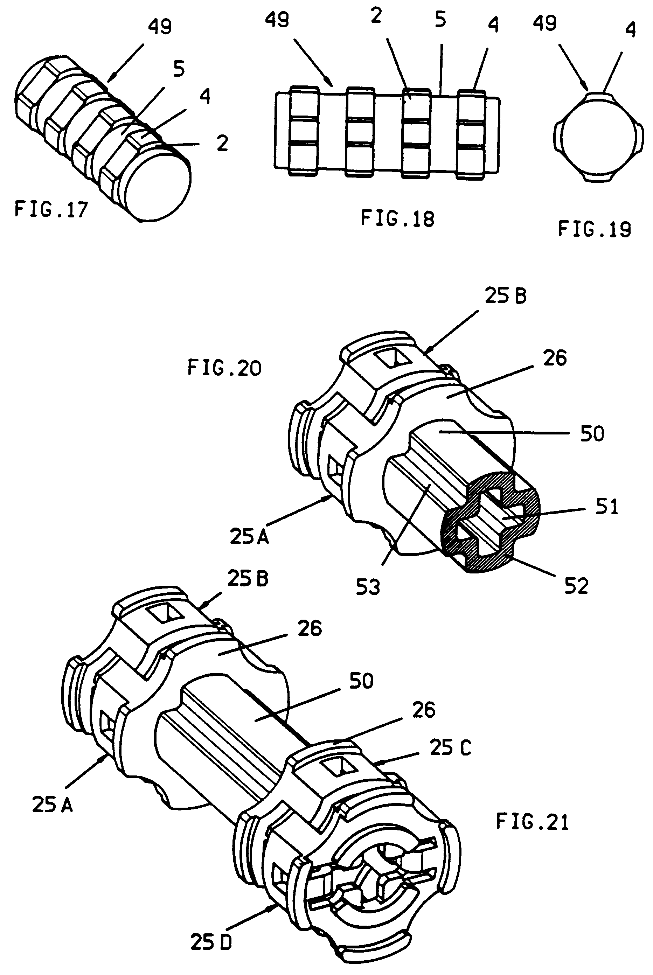

Da die bisher beschriebene, aus den Buchsenteilen 7 und 8 bzw. 25 A und 25 B bestehende Schaftbuchse in ihrem Aufbau einzig von der Querschnittsform des vorgesehenen Schafts abhängig ist, kann ohne weiteres eingesehen werden, dass gegebenenfalls andere Querschnittsformen des Schafts durch geringfügige Aenderungen des Buchsenteils 25 der Fig. 9 bis 12 berücksichtigt werden können. Massgebend ist hierbei die Form der Oeffnung 29 des Flansches 26 (Fig. 9, 12), welche der Querschnittsform des vorgesehenen Schafts zu entsprechen hat,wobei vorausgesetzt ist, dass der Schaftquerschnitt bezüglich seiner Querschnittsteile axialsymmetrisch ausgebildet ist, also insbesondere vier um je 90° versetzte, identische Querschnittsteile hat. Somit sind auch andere Schaftausbildungen gemäss den Fig. 17 bis 19 für die erfindungsgemässe Verbindungsvorrichtung beispielsweise in Betracht zu ziehen.

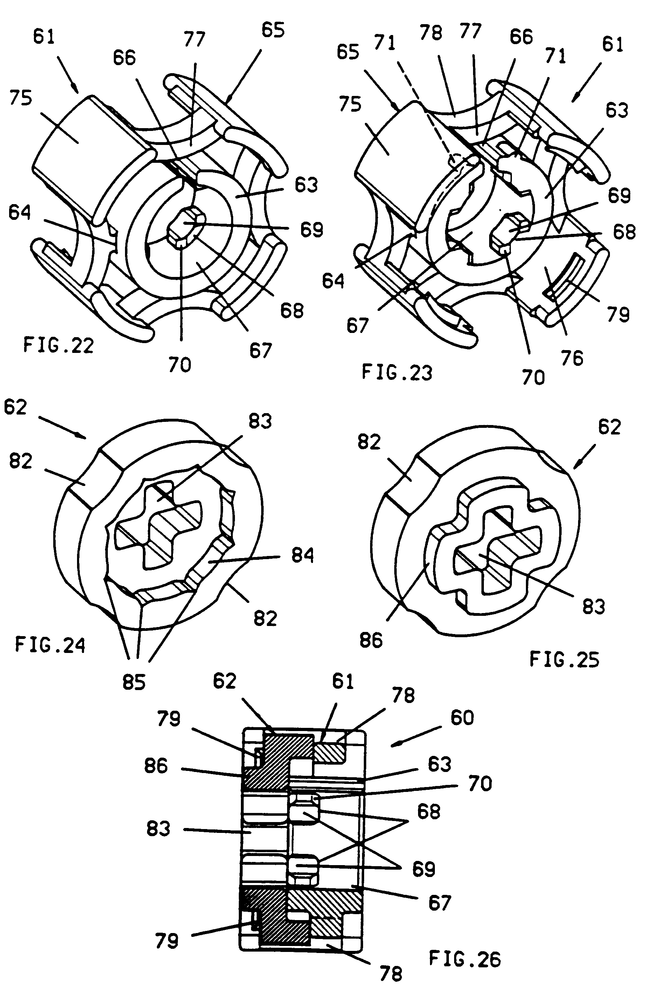

In den Fig. 17 bis 19 ist ein Schaft 49 dargestellt, der ebenfalls einen von der Kreisform abweichenden Querschnitt aufweist, welcher hier im wesentlichen die Form eines Vierecks, insbesondere eines Quadrats hat, dessen Ecken abgeflacht bzw. abgerundet sind und äussere Flächen 4 haben, die wiederum durch Abschnitte einer Kreiszylinderfläche gebildet sind. In gleichmässigen Abständen zwischen den Querschnittsteilen 2 ist der Schaft 49 mit den bereits beschriebenen Quernuten 5 versehen. Eine für den Schaft 49 vorgesehene Schaftbuchse setzt sich aus zwei Buchsenteilen ähnlich den Buchsenteilen 25 A und 25 B in Fig. 15 und 16 zusammen, wobei jedoch die mittige Oeffnung der beiden Buchsenteile in Abweichung von der Oeffnung 29 der Fig. 12 eine dem Querschnitt des Schafts 49 nach Fig. 19 entsprechende Form hat. Zudem muss selbstverständlich die radiale Ruhelage der beiden Zungen 11 (Fig. 4 bis 8) bzw. der vier Zungen 38 (Fig. 9 bis 12) auf den Durchmesser der äusseren Flächen 4 des Schafts 49 der Fig. 17 bis 19 abgestimmt sein, oder umgekehrt. Dann ist die Funktion der entsprechend modifizierten, nicht dargestellten Schafthülse auf dem Schaft 49 der Fig. 17 bis 19 die gleiche wie diejenige der aus den miteinander verbundenen Buchsenteilen 25 A und 25 B bestehenden Schafthülse der Fig. 13 bis 16 auf dem Schaft 1 der Fig.1 bis 3.

Bei dem in Fig. 20 dargestellten Ausführungsbeispiel der aus den ineinandergreifenden Buchsenteilen 25 A und 25 B bestehenden Schaftbuchse (vgl. auch die Fig. 15 und 16) ist das eine Buchsenteil 25 A an seinem Flansch 26 (vgl. Fig. 9) mit einem axialen Verlängerungsansatz 50 versehen, der an den Flansch 26 angeformt ist. Der Ansatz 50 weist eine axiale Durchgangsöffnung 51 auf, deren Querschnitt genau der kreuzförmigen Oeffnung 29 des in Fig. 9 dargestellten Buchsenteils 25 entspricht und deshalb zur Aufnahme eines Schafts 1 gemäss Fig. 1 ausgebildet ist. Wenn demnach die Schaftbuchse 25 A / 25 B der Fig. 20 auf einem Schaft 1 gemäss Fig. 1 in der vorbeschriebenen Weise verankert ist, kann in das offene Ende des Ansatzes 50 ein weiterer Schaft gemäss Fig. 1 gesteckt werden. In Fig. 20 ist die Endfläche 52 des offenen Endes des Ansatzes 50 gestrichelt dargestellt, um anzudeuten, dass der Ansatz 50 eine beliebige Länge haben kann. Durch die gestrichelte Darstellung der Endfläche 52 wird ferner angedeutet, dass an die Endfläche 52 weitere Verbindungselemente (nicht dargestellt) angeformt sein können, welche eine Verbindung des Ansatzes 50 und damit der Schaftbuchse 25 A / 25 B mit einem anderen Bauelement entweder in koaxialer Richtung zum Ansatz 50 oder in zum Ansatz 50 senkrechter Richtung erlauben. Die auf der Aussenseite des Ansatzes 50 dargestellten Längsausnehmungen 53 haben keine mechanische Funktion, sondern dienen nur einer Verminderung unnötiger Materialansammlungen.

Bei der Ausführungsform der Fig. 20 ist ein in den Ansatz 50 gesteckter Schaft (nicht dargestellt) in der einen oder anderen Drehrichtung mit dem Schaft, auf welchem die Schaftbuchse 25 A / 25 B verankert ist, fest verbunden, dagegen offensichtlich nicht in axialer Richtung. Um eine in jeder Richtung starre, lösbare Verbindungsvorrichtung zweier Schäfte 1 gemäss Fig 1 zu erzielen, wird gemäss Fig. 21 die Massnahme vorgesehen, die Endfläche 52 des Ansatzes 50 der Fig. 20 an den stirnseitigen Flansch 26 entsprechend Fig. 9 eines weiteren Buchsenteils 25 C fest anzuformen, das gleich ausgebildet ist wie das in Fig. 9 dargestellte Buchsenteil 25, und das in Verbindung mit einem mit ihm zusammengesteckten, identischen Buchsenteil 25 D eine zweite Schaftbuchse bildet, welche mit der Schaftbuchse 25 A / 25 B übereinstimmt. Die eine Schaftbuchse 25 A / 25 B wird demnach auf dem Endbereich eines ersten Schafts und die Schaftbuchse 25 C / 25 D auf dem Endbereich eines zweiten Schafts verankert, wobei der Ansatz 50 allenfalls vorstehende Enden der Schäfte aufnimmt. Da die Verankerung jeder Schaftbuchse 25 A / 25 B bzw. 25 C / 25 D auf ihrem Schaft sowohl in Drehrichtung als auch in axialer Richtung fest ist, ergibt sich eine entsprechend feste Verbindung der beiden Schäfte.

Anhand der Fig. 15 und 16 ist eine erfindungsgemässe Schaftbuchse beschrieben worden, welche sich aus zwei identischen, ineinander geschobenen Buchsenteilen 25 A und 25 B zusammensetzt. Jedes Buchsenteil 25 A, 25 B weist hierbei in diametraler Anordnung zwei Zungen 38 und zwei Nocken 43 auf. Damit die Nocken 43 des jeweils einen Buchsenteils auf die Zungen 38 des jeweils andern Buchsenteils einwirken können, werden die beiden Buchsenteile 25 A, 25 B in um 90° gegenseitig gedrehter Lage zusammengesetzt. Das gleiche Prinzip lässt sich bei entsprechender Grösse der Buchsenteile auch mit einer höheren, durch zwei teilbaren Anzahl von Zungen und Nocken in jeweils diametraler Anordnung in jedem Buchsenteil anwenden, beispielsweise mit vier Zungen und Nocken in jedem Buchsenteil.

Es ist aber auch möglich, eine Dreierteilung vorzusehen, indem jedes Buchsenteil drei in Winkelbereichen von 120° angeordnete Zungen und dazwischen drei ebenfalls in Winkelbereichen von 120° angeordnete Nocken aufweist. Die beiden identischen Buchsenteile dieser Art werden dann in um 60° gegeneinander gedrehter Winkellage durch Ineinanderschieben zusammengesetzt. Hierbei müssen selbstverständlich auch die übrigen Partien dieser Buchsenteile, wie die Hülsenabschnitte 27 und 28, die Oeffnungen 37 und die Vorsprünge 45 des in den Fig. 9 bis 12 dargestellten Buchsenteils 25, der vorgesehenen Dreierteilung angepasst werden. Ferner muss der zugehörige Schaft eine Symmetrie bezüglich einer Winkellage von 60° aufweisen.

Bei den in Fig. 4-16 gezeigten Ausführungsbeispielen werden die Buchsenteile 7, 8 zur Sicherung axial gegeneinander verschoben. Es ist jedoch auch möglich, die Sicherung durch ein Verdrehen der beiden Buchsenteile gegeneinander zu verwirklichen. Die beiden Buchsenteile können in diesem Fall nicht identisch ausgebildet werden, sondern das sichernde Buchsenteil muss gegenüber dem Schaft 1 verdrehbar sein und deshalb eine zylindrische Durchgangsbohrung aufweisen. Im Unterschied zu den zuvor beschriebenen Ausführungsformen braucht dann das die federnde Zunge 11 mit dem Nocken 12 übergreifende Sicherungselement nicht radial federnd zu sein. Damit kann eine stärker belastbare axiale Sicherung trotz kleinerem Kraftaufwand für die Sicherungsbewegung erzielt werden.

In den Fig. 22 bis 32 ist eine weitere Ausführungsform einer erfindungsgemässen Schaftbuchse 60 dargestellt, welche durch eine Drehbewegung von zwei Buchsenteilen 61, 62 gegeneinander zwischen einer Lösestellung, in welcher die Schaftbuchse längs des Schaftes 1 (Fig. 1-3) axial verschiebbar ist, und einer Sperrstellung beweglich sind, in welchen radiale Vorsprünge in die Quernuten 5 des Schaftes 1 formschlüssig eingreifen.
Das erste Buchsenteil 61 (Fig. 22 und 23) besteht aus einer Hülse 63 und einem über drei Stege 64 einstückig daran angeformten Drehglied 65. Die Hülse 63 hat einen durchgehenden Längsschlitz 66 und eine zylindrische Innenfläche 67, deren Durchmesser dem Durchmesser der äusseren Fläche 4 des Schaftes 1 entspricht. Von der Innenfläche 67 ragen vier radiale Vorsprünge 68 nach innen zum Eingriff in die Quernuten 5 des Schaftes 1. Diese Vorsprünge 68 sind wie folgt ausgebildet:
- In Umfangsrichtung sind die radialen Vorsprünge 68 gleichmässig verteilt, hier also in Winkelabständen von 90°;
- die Breite jedes Vorsprungs 68 in der Achsrichtung der Hülse 63 ist höchstens gleich der Breite B der Quernuten 5 des Schaftes 1 (Fig. 2);
- die Vorsprünge 68 weisen kreiszylindrische Innenflächen 69 auf, deren Durchmesser mindestens gleich dem Durchmesser D der Quernuten 5 des Schaftes 1 (Fig. 3) ist;
- die Abmessung jedes Vorsprungs 68 in Umfangsrichtung der Hülse 63 ist höchstens gleich der Abmessung in Umfangsrichtung der Zwischenbereiche 3 des Schaftes 1 (Fig. 3); und
- zur Erleichterung des Einfahrens in die Quernuten 5 des Schaftes 1 haben die Vorsprünge 68 in Umfangsrichtung betrachtet beidseitig keilförmige Anschrägungen 70.

Benachbart dem Längsschlitz 66 hat die Hülse 63 in ihrem einen Endbereich beidseits des Längsschlitzes 66 je eine radial nach aussen ragende Rastnase 71. Durch den Längsschlitz kann die Hülsenwandung im Bereich der Rastnasen 71 radial nach innen federn.

Das Drehglied 65 besteht aus vier kreiszylindersegmentförmigen äusseren Griffteilen 75 mit zylindrischen Innenflächen 76 und Verbindungsteilen 77, welche Griffmulden 78 zur Erleichterung des manuellen Verdrehens bilden. Die Griffteile 75 sind axial länger als die Hülse 63. Von den Innenflächen 76 der Griffteile 75 ragen auf der einen Seite keilförmige Rastvorsprünge 79 radial nach innen.

Das zweite Buchsenteil 62 (Fig. 24 und 25) ist scheibenförmig ausgebildet und hat einen Aussendurchmesser, welcher dem Innendurchmesser der Griffteile 75 entspricht. Am Aussenumfang sind vier Mulden 82 angebracht, welche in den Abmessungen und in der Verteilung den Griffmulden 78 entsprechen. Das Buchsenteil 62 hat eine Durchgangsöffnung 83, deren Querschnitt dem Querschnitt des Schaftes 1 (Fig. 1 - 3) entspricht. Auf der einen Seite hat das Buchsenteil 62 eine zylindrische Ansenkung 84, deren Durchmesser dem Aussendurchmesser der Hülse 63 entspricht. In der peripheren Wand der Ansenkung 84 sind acht Rastkerben 85 gleichmässig über den Umfang verteilt. Auf der gegenüberliegenden Seite hat das Buchsenteil 62 einen kreuzförmigen Vorsprung 86.

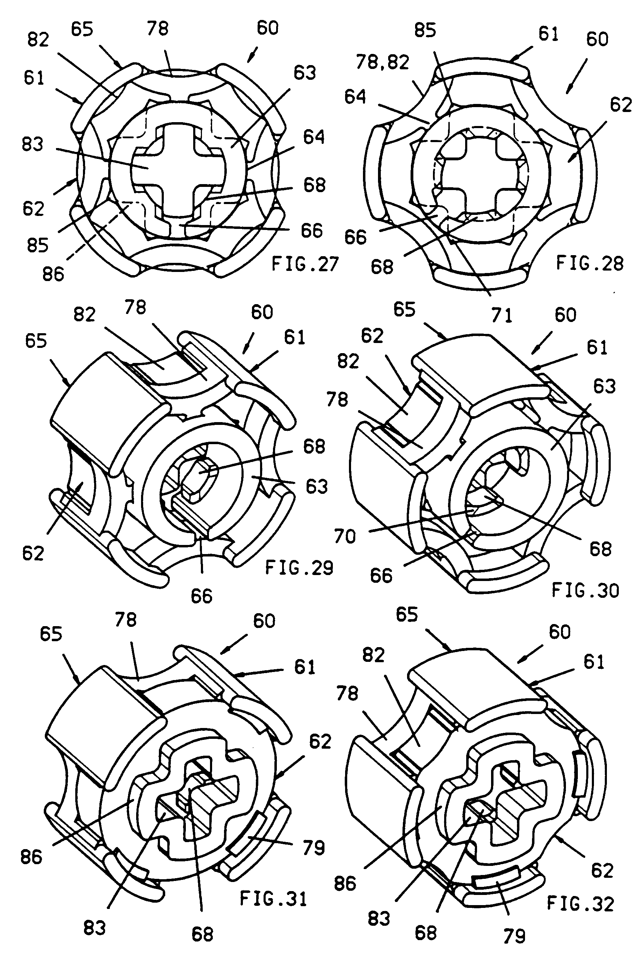

Zur Montage wird das Buchsenteil 62 zwischen die Griffteile 75 mit der Ansenkung 84 voran eingedrückt, bis es hinter den Rastvorsprüngen 79 einrastet und damit unverlierbar im Buchsenteil 61 gehalten ist. Die beiden Rastnasen 71 der Hülse 63 rasten in zwei der Rastkerben 85 ein, und zwar zunächst so, dass die Vorsprünge 68 nicht in den Querschnitt der Oeffnung 83 ragen (Fig. 27, 29 und 31). In dieser Löse-Stellung kann die Schaftbuchse 60 auf dem Schaft 1 in Axialrichtung verschoben werden. Wenn die gewünschte axiale Lage der Schaftbuchse 60 auf dem Schaft 1 erreicht ist, wird das Hülsenteil 61 um 45° gedreht. Dabei rasten die beiden Rastnasen 71 in den nächsten beiden Rastkerben 85 ein und die vier Vorsprünge 68 greifen formschlüssig in die betreffenden Quernuten 5 des Schaftes 1 ein, so dass die Schaftbuchse 60 axial unverschiebbar auf dem Schaft 1 gesichert ist. In der gesicherten Stellung sind die Mulden 82 bündig mit den Griffmulden 78, so dass sofort ersichtlich ist, ob die Schaftbuchse 60 in der gesicherten Stellung oder in der Löse-Stellung ist. Die Mulden 82 sind auch nützlich, wenn auf dem gleichen Schaft 1 zwei Schaftbuchsen 60 aufgesetzt sind und eine bestimmte dieser beiden Buchsen in die entriegelte Stellung gedreht werden soll. Man greift zu diesem Zweck mit den Fingern der einen Hand in die Mulden 82, 78 der einen Schaftbuchse und dreht mit der andern Hand das Buchsenteil 61 der andern zu lösenden Buchse. Auch bei dieser Ausführungsform ist das Einrasten in die gesicherte Stellung sicht-, hör- und fühlbar.

Wie bei der Ausführungsform nach Fig. 20 kann auch hier der Vorsprung 86 des zweiten Buchsenteils 62 axial länger ausgebildet werden, um zwei Schäfte 1 drehfest miteinander zu verbinden. Es ist auch möglich, an den Vorsprung 86 ein Rad, z.B. ein Zahnrad anzuformen, das dann mit dem Schaft 1 drehfest und axial unverschiebbar verbunden ist. Analog der Ausführungsform nach Fig. 21 kann an den verlängerten Vorsprung 86 ein weiteres, identisches Buchsenteil 62 angeformt sein, auf welches ein weiteres Buchsenteil 61 aufgesteckt ist. Dadurch können zwei Schäfte 1 drehfest und axial unverschiebbar miteinander verbunden werden.

## Patentansprüche

1. Verbindungsvorrichtung für Bauelemente, insbesondere Spielzeug-Bauelemente, mit einem Schaft (1) und einer auf den Schaft (1) in dessen Längsrichtung aufschiebbaren Schaftbuchse (7,8;25;60), wobei der Schaft (1) einen von der Kreisform abweichenden Querschnitt mit mehreren radial vorstehenden Querschnittsteilen (2) hat, die aus Abschnitten einer Kreiszylinderfläche bestehende äussere Flächen (4) haben und die durch Zwischenbereiche (3) kleineren Durchmessers voneinander getrennt sind, und wobei der Schaft (1) mit mehreren, in axialem Abstand voneinander angeordneten Quernuten (5) versehen ist, in welche die Schaftbuchse (7,8;25;60) zur Festlegung ihrer Längslage auf dem Schaft (1) einrastbar ist, dadurch gekennzeichnet, dass die Schaftbuchse (7,8;25, 60) aus einem ersten Buchsenteil (7,25A,61) und einem zweiten Buchsenteil (8,25B,62) besteht, dass die beiden Buchsenteile (7,8;25A,25B;61,62) unverlierbar miteinander verbunden und gegeneinander zwischen einer Löse-Stellung und einer Sperrstellung bewegbar sind, dass in der Löse-Stellung die Schaftbuchse (7,8;25;60) axial längs des Schaftes (1) verschiebbar ist und in der Sperrstellung mindestens ein an einem der Buchsenteile (7,25A,25B,61) einstückig angeformter Vorsprung (12,40,68) in eine der Quernuten (5) des Schaftes (1) formschlüssig eingreift, dass zusammenwirkende Rastelemente (13,19;41,44;71,85), jeweils am ersten und zweiten Buchsenteil (7,8;25A,25B;61,62) einstückig angeformt, vorhanden sind, welche zumindest in einer der Stellungen der beiden Buchsenteile gegenseitig einrasten, und dass mindestens eines der Buchsenteile (7,8;25A,25B;62) eine dem Querschnitt des Schaftes (1) angepasste Durchgangsöffnung (29,83) zum drehfesten Eingriff mit dem Schaft (1) aufweist.

2. Vorrichtung nach Anspruch 1, dadurch gekennzeichnet, dass die beiden Buchsenteile (7,8;25A,25B;61,62) durch eine Schnappverbindung (20,45,79) miteinander verbunden sind.

3. Vorrichtung nach Anspruch 1 oder 2, dadurch gekennzeichnet, dass der Grund (6) der Quernuten (5) des Schaftes (1) kreiszylindrisch ist.

4. Vorrichtung nach einem der Ansprüche 1 bis 3, dadurch gekennzeichnet, dass die beiden Buchsenteile (61,62) drehbar miteinander verbunden sind, und dass die Rastelemente als am einen Buchsenteil (61) angeformten Rastnasen (71) und am andern Buchsenteil (62) angeformte Ausnehmungen (85) ausgebildet sind.

5. Vorrichtung nach Anspruch 4, dadurch gekennzeichnet, dass das erste Buchsenteil (61) ein Hülsenteil (63) mit einer im wesentlichen kreiszylindrischen Innenfläche (67) hat, deren Durchmesser mindestens gleich dem Durchmesser der kreiszylindrischen äusseren Fläche (4) des Schaftes (1) ist, dass der Vorsprung (68) von der kreiszylindrischen Innenfläche (67) radial nach innen vorsteht, und dass das zweite Buchsenteil (62) die dem Querschnitt des Schaftes (1) angepasste Durchgangsöffnung (83) aufweist.

6. Vorrichtung nach Anspruch 5, dadurch gekennzeichnet, dass am Hülsenteil (63) ein Drehglied (65) mit mehreren Griffmulden (78) angeformt ist, dass das zweite Buchsenteil (62) an seiner äusseren Umfangsfläche mit Mulden (82) versehen ist, deren Anzahl, Winkelabstände und Abmessungen mit den Griffmulden (78) des Drehgliedes (65) übereinstimmen, und dass die Mulden (82) des zweiten Buchsenteils (62) in der Sperrstellung mit den Griffmulden (78) des Drehgliedes (65) fluchten.

7. Vorrichtung nach Anspruch 5 oder 6, dadurch gekennzeichnet, dass das Hülsenteil (63) mindestens einen durchgehenden Längsschlitz (66) hat, und dass die Rastnasen (71) am Aussenumfang des Hülsenteils (63) benachbart dem Längsschlitz (66) angeformt sind.

8. Vorrichtung nach einem der Ansprüche 5 bis 7, dadurch gekennzeichnet, dass am zweiten Buchsenteil (62) ein axialer Vorsprung (86) und an diesem Vorsprung (86) ein weiteres, identisches zweites Buchsenteil (62) angeformt ist, und dass dieses weitere zweite Buchsenteil (62) unverlierbar mit einem zum erwähnten ersten Buchsenteil (61) identischen weiteren ersten Buchsenteil (61) verbunden ist.

9. Vorrichtung nach einem der Ansprüche 1 bis 3, dadurch gekennzeichnet, dass das erste Buchsenteil (7,25A) die dem Querschnitt des Schaftes (1) angepasste Durchgangsöffnung (29) sowie mindestens ein radial elastisches Element (11,38) aufweist, an welchem der Vorsprung (12,40) angeformt ist, und dass das zweite Buchsenteil (8,25B) ein das elastische Element (11,38) in der Sperrstellung übergreifendes Druckelement (18,43) zur Verriegelung des Vorsprungs (12,40) in einer der Quernuten (5) des Schaftes (1) hat.

10. Vorrichtung nach Anspruch 9, dadurch gekennzeichnet, dass die Rastelemente durch zusammenwirkende Erhebungen (19, 44) und Vertiefungen (13,41) am elastischen Element (11,38) und am Druckelement (18,43) gebildet sind.

11. Vorrichtung nach Anspruch 9 oder 10, dadurch gekennzeichnet, dass die beiden Buchsenteile (7,8; 25) drehfest und axial gegeneinander verschiebbar miteinander verbunden sind.

12. Vorrichtung nach Anspruch 11, dadurch gekennzeichnet, dass die beiden Buchsenteile (25A,25B) identisch ausgebildet und in um 90° versetzter, gegenseitiger Winkellage ineinander geschoben sind.

13. Vorrichtung nach einem der Ansprüche 9 bis 12, dadurch gekennzeichnet, dass am ersten Buchsenteil (25A) ein axialer Vorsprung (50) und an diesem Vorsprung (50) ein weiteres, identisches erstes Buchsenteil (25C) angeformt ist, und dass dieses weitere erste Buchsenteil (25C) unverlierbar mit einem zum erwähnten zweiten Buchsenteil (25B) identischen weiteren zweiten Buchsenteil (25D) verbunden ist.

14. Vorrichtung nach einem der Ansprüche 1 bis 13, dadurch gekennzeichnet, dass die Schaftbuchse (7,8;25;60) mindestens an ihrem einen axialen Ende eine ebene, senkrecht zur Buchsenachse angeordnete Stirnfläche aufweist, die durch periphere Randabschnitte (32) und zentrale, ringförmige Teile (42) gebildet ist, und dass die Schaftbuchse (7,8;25;60) in einem ringförmigen Bereich zwischen den Randabschnitten (32) und den zentralen, ringförmigen Teilen (42) axial gegenüber der Stirnfläche zurückversetzt ist.

## Claims

1. Connecting device for structural elements, especially structural elements of a toy, having a stem (1) and a stem bushing (7, 8; 25; 60) which can be slid onto the stem (1) in its longitudinal direction, the stem (1) having a cross-section, deviating from the circular form, having a plurality of radially protruding cross-sectional parts (2), which have outer surfaces (4) comprising sections of a circular cylinder surface and which are separated from one another by intermediate regions (3) of lesser diameter, and the stem (1) being provided with a plurality of transverse grooves (5), disposed at an axial distance apart, into which the stem bushing (7, 8; 25; 60) can be latch-locked for the securement of its longitudinal position on the stem (1), characterized in that the stem bushing (7, 8; 25; 60) comprises a first bushing part (7, 25A, 61) and a second bushing part (8, 25B, 62), in that the two bushing parts (7, 8; 25A, 25B; 61, 62) are captively connected together and can be moved mutually between a release setting and a locking setting, in that in the release setting the stem bushing (7, 8; 25; 60) is axially displaceable along the stem (1) and in the locking setting at least one projection (12, 40, 68), formed in one piece on one of the bushing parts (7, 25A, 25B, 61), engages positively in one of the transverse grooves (5) of the stem (1), in that interacting latching elements (13, 19; 41, 44; 71, 85) are present which are respectively formed in one piece on the first and second bushing part (7, 8; 25A, 25B; 61, 62) and, at least in one of the settings of the two bushing parts, reciprocally latch-lock, and in that at least one of the bushing parts (7, 8; 25A, 25B; 62) exhibits a pass-through opening (29, 83), matched to the cross-section of the stem (1), for rotationally secure engagement with the stem (1).

2. Device according to Claim 1, characterized in that the two bushing parts (7, 8; 25A, 25B; 61, 62) are connected together by a snap connection (20, 45, 79).

3. Device according to Claim 1 or 2, characterized in that the floor (6) of the transverse grooves (5) of the stem (1) is circularly cylindrical.

4. Device according to one of Claims 1 to 3, characterized in that the two bushing parts (61, 62) are rotatably connected together, and in that the latching elements are configured as latch bosses (71) formed on the one bushing part (61) and recesses (85) formed on the other bushing part (62).

5. Device according to Claim 4, characterized in that the first bushing part (61) has a sleeve part (63) having an essentially circularly cylindrical inner surface (67), the diameter of which is at least equal to the diameter of the circularly cylindrical outer surface (4) of the stem (1), in that the projection (68) of the circularly cylindrical inner surface (67) protrudes radially inwards, and in that the second bushing part (62) exhibits the pass-through opening (83) matched to the cross-section of the stem (1).

6. Device according to Claim 5, characterized in that a turning member (65) having a plurality of grip depressions (78) is formed on the sleeve part (63), in that the second bushing part (62) is provided on its outer peripheral surface with depressions (82), the number, angular spacings and dimensions of which tally with the grip depressions (78) of the turning member (65), and in that the depressions (82) of the second bushing part (62) are aligned, in the locking setting, with the grip depressions (78) of the turning member (65).

7. Device according to Claim 5 or 6, characterized in that the sleeve part (63) has at least one continuous longitudinal slot (66), and in that the latch bosses (71) are formed on the outer periphery of the sleeve part (63) adjacent to the longitudinal slot (66).

8. Device according to one of Claims 5 to 7, characterized in that on the second bushing part (62) there is formed an axial projection (86) and on this projection (86) a further, identical second bushing part (62), and in that this further, second bushing part (62) is captively connected to a further, first bushing part (61) identical to the aforementioned first bushing part (61).

9. Device according to one of Claims 1 to 3, characterized in that the first bushing part (7, 25A) exhibits the pass-through opening (29) matched to the cross-section of the stem (1) and at least one radially elastic element (11, 38) on which the projection (12, 40) is formed, and in that the second bushing part (8, 25B) has a pressure element (18, 43), reaching over the elastic element (11, 38) in the locking setting, for locking the projection (12, 40) into one of the transverse grooves (5) of the stem (1).

10. Device according to Claim 9, characterized in that the latching elements are formed by interacting elevations (19, 44) and indentations (13, 41) on the elastic element (11, 38) and on the pressure element (18, 43).

11. Device according to Claim 9 or 10, characterized in that the two bushing parts (7, 8; 25) are connected together such that they are rotationally secure and mutually displaceable in the axial direction.

12. Device according to Claim 11, characterized in that the two bushing parts (25A, 25B) are identically configured and are slid into one another in a 90°-offset, reciprocal angular position.

13. Device according to one of Claims 9 to 12, characterized in that on the first bushing part (25A) there is formed an axial projection (50) and on this projection (50) a further, identical first bushing part (25C), and in that this further, first bushing part (25C) is captively connected to a further, second bushing part (25D) identical to the aforementioned second bushing part (25B).

14. Device according to one of Claims 1 to 13, characterized in that the stem bushing (7, 8; 25; 60) exhibits, at least at its one axial end, a flat end face which is disposed perpendicular to the bushing axis and is formed by peripheral marginal sections (32) and central, annular parts (42), and in that the stem bushing (7, 8; 25; 60), in an annular region between the marginal sections (32) and the central, annular parts (42), is axially set back in relation to the end face.

## Revendications

1. Dispositif d'assemblage pour des éléments de construction, notamment des éléments de jeu de construction, comprenant un corps (1) et une douille (7, 8 ; 25 ; 60) pouvant être enfilée sur le corps (1) dans sa direction longitudinale, le corps (1) possédant une section divergeant de la forme circulaire avec plusieurs parties de section (2), dépassant radialement, qui présentent des faces extérieures (4) constituées de segments d'une surface cylindrique circulaire et sont mutuellement séparées par des régions intermédiaires (3) de diamètre inférieur, et le corps (1) étant doté de plusieurs rainures transversales (5), disposées à distance axiale mutuelle, dans lesquelles la douille (7, 8 ; 25 ; 60) peut être enclenchée afin de fixer sa position longitudinale sur le corps (1), **caractérisé** en ce que la douille (7, 8 ; 25 ; 60) est constituée d'une première partie de douille (7, 25A, 61) et d'une seconde partie de douille (8, 25B, 62), en ce que les deux parties de douille (7, 8 ; 25A, 25B ; 61, 62) sont mutuellement reliées de façon imperdable et peuvent être déplacées l'une par rapport à l'autre entre une position de libération et une position de blocage, en ce que, dans la position de libération, la douille (7, 8 ; 25 ; 60) peut être déplacée en translation axiale le long du corps (1) et, dans la position de blocage, au moins une saillie (12, 40, 68), formée d'un seul tenant sur une des parties de douille (7, 25A, 25B, 61), s'engage en liaison positive dans une des rainures transversales (5) du corps (1), en ce que des éléments d'enclenchement coopérants (13, 19 ; 41, 44 ; 71, 85) sont respectivement présents sur les première et seconde parties de douille (7, 8 ; 25A, 25B ; 61, 62), sur lesquelles ils sont solidairement formés, et en ce qu'au moins une des parties de douille (7, 8 ; 25A, 25B ; 61, 62) présente une ouverture traversante (29, 83), adaptée à la section du corps (1), pour son engagement en fixité de rotation sur le corps (1).

2. Dispositif selon la revendication 1, **caractérisé** en ce que les deux parties de douille (7, 8 ; 25A, 25B ; 61, 62) sont mutuellement reliées par une liaison à encliquetage (20, 45, 79).

3. Dispositif selon la revendication 1 ou 2, **caractérisé** en ce que le fond (6) des rainures transversales (5) du corps (1) est cylindrique circulaire.

4. Dispositif selon l'une quelconque des revendications 1 à 3, **caractérisé** en ce que les deux parties de douille (61, 62) sont mutuellement reliées à rotation, et en ce que les éléments d'enclenchement sont réalisés sous la forme d'ergots d'enclenchement (71) formés sur une partie de douille (61) et d'évidements (85) formés sur l'autre partie de douille (62).

5. Dispositif selon la revendication 4, **caractérisé** en ce que la première partie de douille (61) possède une partie de manchon (63) à face intérieure (67) essentiellement cylindrique circulaire dont le diamètre est au moins égal à celui de la surface extérieure cylindrique circulaire (4) du corps (1), en ce que la saillie (68) dépasse de la face intérieure cylindrique circulaire (67) radialement vers l'intérieur, et en ce que la seconde partie de douille (62) présente l'ouverture traversante (83) adaptée à la section du corps (1).

6. Dispositif selon la revendication 5, **caractérisé** en ce qu'un élément de rotation (65), doté de plusieurs cuvettes de préhension (78), est formé sur la partie de manchon (63), en ce que la seconde partie de douille (62) est dotée sur sa face périphérique extérieure de cuvettes (82) correspondant en nombre, écartement angulaire et dimensions aux cuvettes de préhension (78) de l'élément de rotation (65), et en ce que les cuvettes (82) de la seconde partie de douille (62) sont alignées, dans la position de blocage, avec les cuvettes de préhension (78) de l'élément de rotation (65).

7. Dispositif selon la revendication 5 ou 6, **caractérisé** en ce que la partie de manchon (63) possède au moins une fente longitudinale ininterrompue (66) et en ce que les ergots d'enclenchement (71) sont formées sur la périphérie extérieure de la partie de manchon (63) au voisinage de la fente longitudinale (66).

8. Dispositif selon l'une quelconque des revendications 5 à 7, **caractérisé** en ce qu'une saillie axiale (86) est formée sur la seconde partie de douille (62) et une autre seconde partie de douille (62), identique, est formée sur cette saillie (86), et en ce que cette autre seconde partie de douille (62) est reliée de façon imperdable à une autre première partie de douille (61) identique à la première partie de douille (61) déjà citée.

9. Dispositif selon l'une quelconque des revendications 1 à 3, **caractérisé** en ce que la première partie de douille (7, 25A) présente l'ouverture traversante (29) adaptée à la section du corps (1), ainsi qu'au moins un élément radialement élastique (11, 38) sur lequel est formée la saillie (12, 40), et en ce que la seconde partie de douille (8, 25B) possède un élément de pression (18, 43) qui, dans la position de blocage, vient en prise au-dessus de l'élément élastique (11, 38) pour le verrouillage de la saillie (12, 40) dans une des rainures transversales (5) du corps (1).

10. Dispositif selon la revendication 9, **caractérisé** en ce que les éléments d'enclenchement sont formés par des bossages (19, 44) et des renfoncements (13, 41) coopérants, respectivement sur l'élément élastique (11, 38) et sur l'élément de pression (18, 43).

11. Dispositif selon la revendication 9 ou 10, **caractérisé** en ce que les deux parties de douille (7, 8 ; 25) sont mutuellement reliées en solidarité de rotation et avec possibilité de translation axiale relative.

12. Dispositif selon la revendication 11, **caractérisé** en ce que les deux parties de douille (25A, 25B) sont identiquement configurées et enfilées l'une dans l'autre dans une position angulaire mutuellement décalée de 90°.

13. Dispositif selon l'une quelconque des revendications 9 à 12, **caractérisé** en ce qu'une saillie axiale (50) est formée sur la première partie de douille (25A) et une autre première partie de douille (25C), identique, est formée sur cette saillie (50), et en ce que cette autre première partie de douille (25C) est reliée de façon imperdable à une autre seconde partie de douille (25D), identique à la seconde partie de douille (25B) déjà citée.

14. Dispositif selon l'une quelconque des revendications 1 à 13, **caractérisé** en ce que la douille (7, 8 ; 25 ; 60) présente, au moins à une de ses extrémités axiales, une face frontale plane, disposée perpendiculairement à l'axe de la douille, qui est formée par des parties de bord périphérique (32) et des parties annulaires centrales (42), et en ce que la douille (7, 8 ; 25 ; 60) est axialement renfoncée par rapport à la face frontale dans une région annulaire située entre les parties de bord (32) et les parties annulaires centrales (42).
